# NEUE EUROPÄISCHE PATENTSCHRIFT

(11) **EP 0 877 867 B2**
(45) Veröffentlichungstag und Bekanntmachung des Hinweises auf die Entscheidung über den Einspruch: **02.01.2003**
(45) Hinweis auf die Patenterteilung: 27.10.1999
(21) Anmeldenummer: 97915268.3
(22) Anmeldetag: 23.01.1997
(51) Int. Cl.: F16C 33/20

(54) **SCHICHTWERKSTOFF FÜR GLEITELEMENTE, VERWENDUNG UND VERFAHREN ZU SEINER HERSTELLUNG**
LAMINATED MATERIAL FOR SLIDING ELEMENTS, ITS USE AND METHOD OF PRODUCING THE SAME
MATERIAU STRATIFIE POUR ELEMENTS DE GLISSEMENT, UTILISATION ET PROCEDE PERMETTANT DE LE PRODUIRE

(30) Priorität: 31.01.1996 DE 19603353
(43) Veröffentlichungstag der Anmeldung: 18.11.1998
(73) Patentinhaber: Federal-Mogul Wiesbaden GmbH & Co.KG, 65201 Wiesbaden (DE)
(72) Erfinder: ADAM, Achim, D-64569 Nauheim (DE); GRÜNTHALER, Karl-Heinz, D-61250 Usingen (DE)
(74) Vertreter: Fuchs Mehler Weiss & Fritzsche
(86) Internationale Anmeldenummer: DE9700169
(87) Internationale Veröffentlichungsnummer: WO97028380

(56) Entgegenhaltungen:
- EP-B- 0 217 462
- EP-B- 0 340 839
- DE-A- 1 806 551
- DE-A- 1 925 000
- DE-A- 2 436 424
- DE-A- 2 928 081
- DE-A- 2 935 205
- DE-A- 3 301 167
- DE-A- 3 601 569
- DE-C- 4 430 474

## Beschreibung

Die Erfindung betrifft einen Schichtwerkstoff für Gleitelemente gemäß dem Oberbegriff des Patentanspruchs 1. Die Erfindung bezieht sich auch auf die Verwendung und die Herstellung eines solchen Schichtwerkstoffes.

Lagermaterialien mit Gleitschichten auf Kunststoffbasis sind als 1-, 2- oder 3- schichtige Verbundwerkstoffe bekannt: Vollkunststofflager, Lager mit äußerem metallischem Stützkörper und direkt aufgebrachtem oder aufgeklebtem Kunststoff, solche mit internen Metallgeweben, sowie Dreischichtlager aus Stützmetall, gesinterter poröser Metallschicht und einer auf und in den Poren ausgebildeten Deckschicht. Die mehrschichtigen Werkstoffe unterscheiden sich von den Vollkunststoffmaterialien z.B. durch eine vernachlässigbare Neigung zu kaltem Fluß unter Belastung, eine wesentlich bessere Wärmeleitfähigkeit und damit verbunden durch deutlich höhere mögliche pv-Werte.

Innerhalb der Dreischichtwerkstoffe kann man nun wieder solche mit Gleitschichten auf der Basis von Fluorthermoplasten wie PTFE, PFA, FEP etc. oder von anderen Kunststoffen, wie z.B. PEEK unterscheiden. Die beiden letztgenannten Gruppen müssen in ihrer Funktionsweise unterschieden werden: Während die Bronzezwischenschicht bei PTFE-Basiswerkstoffen lasttragender Bestandteil der Gleitschicht ist und ähnlich wie ein Füllstoff wirkt, nützen die anderen Kunststoffmaterialien diese nur als Verankerung. Auf der Gleitfläche selbst übernimmt hier der Duro- oder Thermoplast die tragende Rolle der Bronze. Bei genügend hoher Affinität zum Metallrücken wird auch die mechanische Verankerung im Bronzegerüst überflüssig und die Herstellung echter Zweischichtmaterialien ist möglich.

Die Herstellung von solchen Zweischichtmaterialien kann vorteilhaft sein aufgrund einer damit verbundenen Kostenreduktion, eröffnet aber auch die Möglichkeit, andere Trägermaterialien als üblich einzusetzen, da deren Verwendbarkeit hier nicht von der Haftung der üblicherweise aufzusinternden porösen Bronzeschicht abhängig ist.

Aus der DE-A-19 25 000 ist ein Material auf PVDF/PTFE-Basis bekannt, das nur als Vollkunststoffmaterial beschrieben ist und als weiteren Zusatz 5 - 35% niedermolekulare Fluorpolymere enthält. Diese werden als unverzichtbar für die Erzielung ausreichender Stabilität der Formkörper beschrieben. Ferner können auch 10 - 25 Teile nichtmetallischer Füllstoffe enthalten sein, um die Abnutzungseigenschaften zu verbessern.

In der DE-A- 18 06 551 wird ein Verfahren zum Beschichten von Metallblechen vorgeschlagen, die im Bauwesen eingesetzt werden sollen und daher einen geeigneten Korrosionsschutz aufweisen müssen. Zwischen dem Metallblech und einer PVF-Beschichtung ist für die Bindung eine haftvermittelnde Grundschicht aus Metalloxiden und PVF notwendig.

Die DE-A-24 36 424 beschreibt ein Verfahren, bei dem die Haftung zwischen Fluorkunststoffen, die ohne Zusatz verwendet werden, und einem metallischen Substrat durch den Abbau innerer Spannungen verbessert wird. Dies wird in der Art beschrieben, daß die Fluorkunststoffe auf dem Substrat zunächst einige Minuten oberhalb der Schmelztemperatur, dann einige Minuten knapp unterhalb der Schmelztemperatur gehalten werden. Diese Materialien werden nicht für Gleitelemente eingesetzt.

Diese Vorveröffentlichungen beinhalten alle die Verwendung zusätzlicher Haftvermittler oder umständlicher thermischer Behandlung. Auch ist zu bemerken, daß eine Schicht, deren Haftung allein durch innere Spannung wesentlich beeinträchtigt wird, für den üblichen Prozeß der Herstellung von mit Kunststoff beschichteten Gleitlagern ohnehin ungeeignet ist, da hier nach der Beschichtung u.U. starke Verformungen vorgenommen werden müssen, ohne daß dies zum Verlust der Haftung führt.

In der EP-B- 0 340 839 wird eine aus PVDF, PTFE und Blei oder einem anderen Metall mit hoher Affinität zum Fluor bestehende Pulvermischung auf ein Metallband aufgebracht und anschließend 5 - 50 min einer Temperatur oberhalb der Zersetzungstemperatur des PVDF ausgesetzt, wodurch besonders gute tribologische Eigenschaften erreicht werden sollen.

Die DE-A-29 28 081 befaßt sich mit der Herstellung von Zweischichtmaterialien auf Stahl, wobei eine Kunststoffgleitschicht auf PVDF-Basis aufgebracht wird. Als Additive sind PTFE, MoS₂ oder Graphit verwendet. In diesem Lagermaterial sind außerdem zwingend Zusatzwerkstoffe mit einer Dichte ≥ 8g/cm³ in einer Menge von 5-35% vorgesehen. Damit sind im wesentlichen Metallkomponenten wie Blei, Bleioxid und dergleichen gemeint, die die Flächenbindung zum Substrat erhöhen sollen. Es wird ferner vorgeschlagen, mit Hilfe des Lösungsmittels DMF aus den Gleitschicht-Komponenten ein dispersionsartiges Gemisch herzustellen und dieses auf den Metallträger aufzubringen.

Alle diese Werkstoffe haben den Nachteil, daß giftige Metalle oder Metallverbindungen vorgesehen sind und ihre Herstellung mit Hilfe von Lösungsmitteln oder gar unter Freisetzung giftiger Zersetzungsprodukte erfolgt.

Ein der DE-OS 2928081 ähnliches Lagermaterial ist in der EP 0 430 324 Al beschrieben. Es besteht aus 5-30% PTFE, 5-60% Bronze und 1-20% Graphit in einer PVDF-Matrix. Der Nachteil dieses Lagermaterials besteht darin, daß von Beginn an ständig ein Bronzeanteil am Reibprozeß beteiligt ist. Dies beeinträchtigt im Falle von Matrixmaterialien wie PVDF die Trockeulaufliähigkeit. Daher ist in der Beschreibung dieser Erfindung ausschließlich von geschmierten Anwendungen, speziell Stoßdämpfern, die Rede.

Aufgabe der Erfindung ist es, einen Schichtwerkstoff, der sich durch eine gute Haftung auf dem Substrat auszeichnet, ohne daß er die Nachteile der bekannten Lagerwerkstoffe auf PVDF-Basis aufweist, sowie ein Verfahren zu seiner Herstellung bereitzustellen.

Diese Aufgabe wird mit einem Schichtwerkstoff gemäß den Merkmalen des Patentanspruchs 1 gelöst. Das Herstellungsverfahren ist Gegenstand des Patentanspruchs 9. Die Verwendung des Schichtwerkstoffes ist Gegenstand des Patentanspruchs 14. Vorteilhafte Ausgestaltungen werden in den Unteransprüchen beansprucht.

Es hat sich überraschend gezeigt, daß eine sehr gute Haftung der Kunststoffgleitschicht auf dem metallischen Trägermaterial erzielt werden kann, wenn die Kunststoffgleitschicht einen hohen PVDF-Anteil von 60-95 Vol.-% aulweist und der Volumenanteil der zweiten Komponente bzw. der übrigen Komponenten 40% nicht übersteigt. Die zweite Komponente kann ausschließlich aus PTFE bestehen oder aus PTFE und mindestens einer weiteren Komponente, deren Dichte < 7g/cm³ beträgt, wobei dieser Volumenanteil vorzugsweise auf maximal 5% begrenzt ist. Damit sollen insbesondere die Komponenten Blei, Zinn, Zink, Indium, Thallium, Cadmium, Wismut, Kupfer oder Silber oder deren Verbindungen oder Legierungen ausgeschlossen werden.

Es hat sich darüber hinaus überraschenderweise gezeigt, daß der erfindungsgemäße Schichtwerkstoff keinerlei Einbußen der tribologischen Eigenschaften gegenüber z.B. den bleimodifizierten Varianten aufweist, sondern daß im Gegenteil diese Eigenschaften sogar noch deutlich verbessert werden, was in einer besseren Verschleißfestigkeit zum Ausdruck kommt.

Besonders gute mechanische und tribologische Eigenschaften werden erreicht, wenn der PVDF-Gehalt zwischen 70 und 88 Vol.-% und der PTFE-Gehait zwischen 12 und 30 Vol-% liegt Die weiteren Komponenten oder Füllstoffe sind einzeln oder kombiniert PI, PAI, Polyamide, PPS, PES, PEEK, PSU Polyester, Graphit, Ruß, C-Fasern, Koks, MoS₂, BN, CaF₂ oder CaCo₃.

Eine besonders gute Haftung der Kunststoffgleitschicht auf dem Substrat ist dann festzustellen, wenn das Trägermaterial eine Oberflächenrauhigkeit R_{z} von mehr als 10µm, vorzugsweise von mehr als 30µm aufweist. Die Kunststoffgleitschicht kann z.B. auf einem Stahlband aufgebracht werden, ohne daß es einer Zwischenschicht, wie z. B. einer porösen Bronze-Sinter-Schicht bedarf, die allerdings nicht ausgeschlossen ist.

Das metallische Trägermaterial kann außer Stahl auch rostfreier Stahl, eine Kupferlegierung, Aluminium oder eine Aluminiumlegierung oder eine mehrschichtige Kombination aus diesen Materalien sein.

Vorzugsweise beträgt die Dicke der Kunststoffgleitschicht über dem Trägermaterial 20-400µm.

Das Verfahren zur Herstellung eines Schichtwerkstoffes ist dadurch gekennzeichnet, daß eine Pulvermischung aus 60-95 Vol.-% PVDF und Rest PTFE oder PTFE und mindestens einer weiteren Komponente mit einer Dichte < 7g/cm³ hergestellt wird, wobei es sich bei der oder den weiteren Komponenteln um PI, PAI, Polyamide, PPS, PES, PEEK, PSU, Polyester, Graphit, Ruß, C-Fasern, Koks, MoS₂, BN, CaF₂ oder CaCO₃ handelt, daß die Pulvermischung auf das metallische Trägermaterial aufgestreut wird und anschließend bis über den Erweichungspunkt des PVDF-Anteils zur Ausbildung der Kunststoffgleitschicht erwärmt wird und daß danach die Kunststoffgleitschicht glatt gewalzt wird. Vorzugsweise werden bis zu 5 Vol.-% der weiteren Komponente(n) zugesetzt.

Für eine gute Verarbeitbarkeit beim Homogenisieren und Auftragen der Pulvermischung sollten die Korngrößen beim PVDF zwischen 40 und 180µm und beim PTFE 20 bis 140 µm betragen. Besonders vorteilhaft sind für PVDF 70 bis 130µm und für PTFE 60 bis 100 µm. Als PTFE-Variante hat sich Regeneratpulver als besonders vorteilhaft erwiesen. Unter einem Regeneratpulver wird gesintertes, gemahlenes PTFE verstanden.

Nachfolgend sind in der Tabelle 1 die sich bei erfindungsgemäßen Materialien auf Stahl ergebenden vorteilhaften Eigenschaftskombinatinen anhand von Beispielen verdeutlicht und dem Stand der Technik gegenübergestellt. Die Messungern zur Zugscherfestigkeit wurden an Proben mit quadratischem Klebebereich 25 x 25 mm bei einer Dehnungsrate von 5mm/min durchgeführt. Die zu verklebenden Metallstreifen waren mit einer Oberflächenrauheit von R_{z} = 20µm versehen. Die tribologischen Untersuchungen wurden an einer stift/Walze-Apparatur vorgenommen, wobei der Walzendurchmesser 100 mm betrug und runde Proben von 10 mm Durchmesser geprüft wurden. Spezifische Prüflast war 17,5 MPa, die Gleitgeschwindigkeit betrug 0,5 m/s, die Rauhigkeit der Walzenoberfläche R_{z} = 1µm.

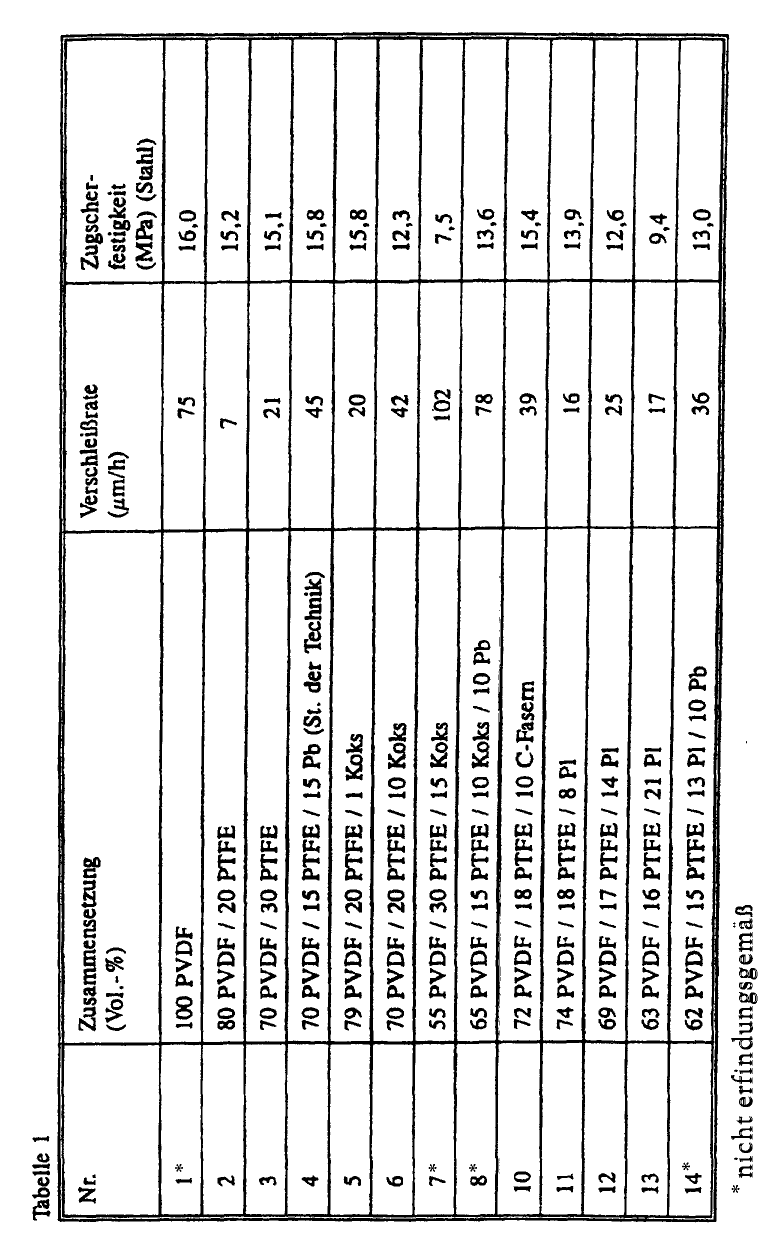

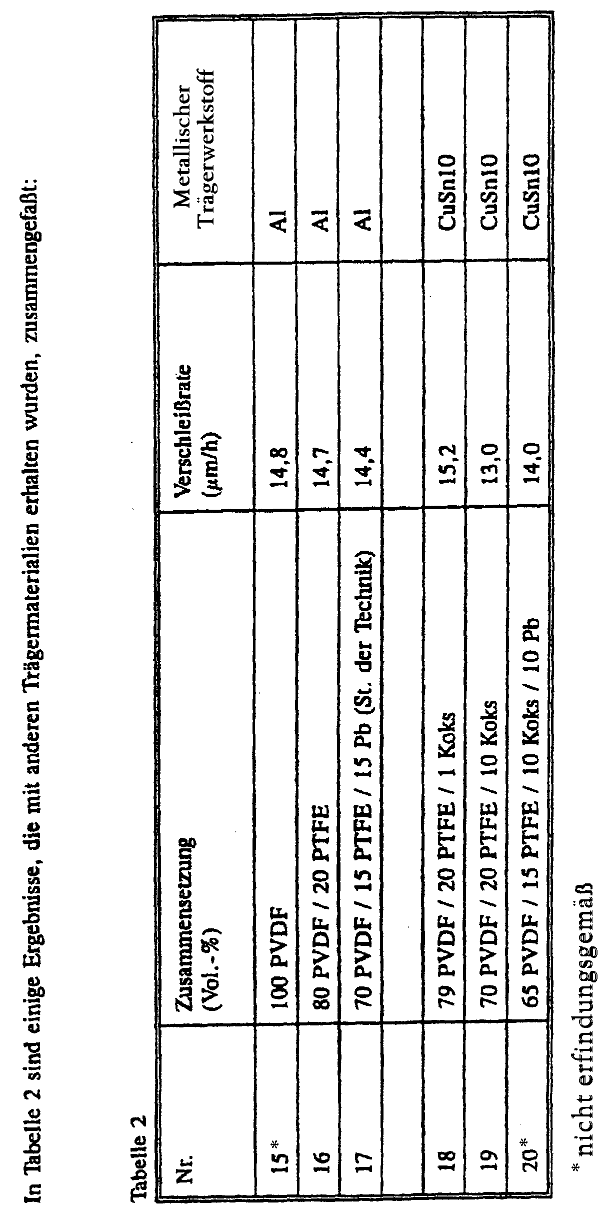

Die Ergebnisse zeigen, daß die Haftung im untersuchten Zusammensetzungsbereich nur unwesentlich beeinflußt wird und eine Variation des Füllstoffgehalts innerhalb der erfindungsgemäßen Grenzen ebenso wie des Trägermaterials weitgehend ohne Beeinträchtigung der Haftung möglich ist. Mit einem Auftreten von Ablöseerscheinungen während der Umformprozesse zu den fertigen Gleitelementen ist erst ab Zugscherfestigkeitswerten unter 11,5 MPa zu rechnen.

Reines PVDF zeigt die beste Haftung, jedoch keine befriedigenden Verschleißeigenschaften. Oberhalb von 40% Gesamtfüllstoff ist die Herstellung der beschriebenen Zweischichtmaterialien aufgrund von Schichtablösungen nicht mehr sinnvoll. Es wird auch mit Beispiel 2 deutlich, daß bei optimierter Zusammensetzung durch den völligen Verzicht auf weitere Zusätze gegenüber dem Stand der Technik ein deutlicher Vorteil erzielt werden kann. Beispiel 4 repräsentiert mit einer marktüblichen Werkstoffzusammensetzung den Stand der Technik bei Materialien auf PVDF-Basis.

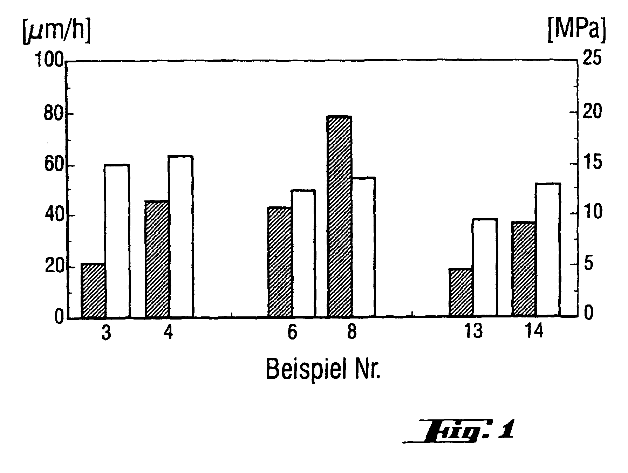

Ein Vergleich der Beispielpaare 3 und 4, 6 und 8 sowie 12 und 14 zeigt, daß durch den Bleizusatz zwar jeweils eine Verbesserung der Zugscherfestigkeit zu verzeichnen ist, jedoch in allen Fällen die Verschleißfestigkeit um etwa die Hälfte abnimmt. Der Einsatz von Blei kann also zwar bei abnehmendem PVDF-Anteil eine gewisse Kompensation des Haftungsverlustes bewirken, wirkt sich aber auf die tribologischen Eigenschaften negativ aus. Dieser Sachverhalt ist zur Verdeutlichung in Figur 1 graphisch dargestellt. Dabei sind der linken Achse die schraffiert dargestellten Verschleiliraten und der rechten Achse die weiß dargestellten Zugscherfestigkeiten zugeordnet.

Zusammenfassend wird demnach unabhängig von der Betrachtungsweise insgesamt durch das System PVDF/PTFE eine größere Leistungsfähigkeit als durch das System PTFE/PVDF/Haftverbesserer (z.B. Pb) erzielt. Die erfindungsgemäßen Gleitlagermaterialien lassen sich vorteilhaft ungeschmiert, jedoch auch in Gegenwart von Fetten oder Ölen wie z.B. im Falle von Stoßdämpferstangen-Führungselementen einsetzen.

## Patentansprüche

1. Schichtwerkstoff für Gleitelemente mit einer metallischen Trägerschicht und einer darauf aufgebrachten Kunststoffgleitschicht, die als Matrixwerkstoff PVDF aufweist, in den PTFE als Füllstoff eingelagert ist,
**dadurch gekennzeichnet,**
**daß** der PVDF-Anteil 60 - 95 Vol.-% beträgt, und
**daß** der Rest aus PTFE oder
PTFE und mindestens einer weiteren Komponente mit einer Dichte < 7 g/cm³ besteht, wobei es sich bei der oder den weiteren Komponenteln um PI, PAI, Polyamide, PPS, PES, PEEK, PSU, Polyester, Graphit, Ruß, C-Fasern, Koks, MoS₂, BN, CaF₂ oder CaCO₃ handelt.

2. Werkstoff nach Anspruch 1, **dadurch gekennzeichnet, daß** der Anteil der weiteren Komponente(n) maximal 5 Vol.-% beträgt.

3. Werkstoff nach Anspruch 1 oder 2, **dadurch gekennzeichnet, daß** der PVDF-Anteil 70 - 88 Vol.-% beträgt.

4. Werkstoff nach Anspruch 3, **dadurch gekennzeichnet, daß** der PTFE-Anteil 12 - 30 Vol.-% beträgt.

5. Werkstoff nach einem der Ansprüche 1 bis 4, **dadurch gekennzeichnet, daß** das Trägermaterial eine Oberflächenrauhigkeit R_{z} von über 10 µm besitzt.

6. Werkstoff nach Anspruch 5, **dadurch gekennzeichnet, daß** das Trägermaterial eine Oberflächenrauhigkeit R_{z} von über 30 µm besitzt.

7. Werkstoff nach einem der Ansprüche 1 bis 6, **dadurch gekennzeichnet, daß** das metallische Trägermaterial Stahl, rostfreier Stahl, eine Kupferlegierung, Aluminium oder eine Aluminiumlegierung oder eine mehrschichtige Kombination aus diesen Materialien ist.

8. Werkstoff nach einem der Ansprüche 1 bis 7, **dadurch gekennzeichnet, daß** die Dicke der Kunststoffgleitschicht über dem Trägermaterial 20 - 400 µm beträgt.

9. Verfahren zur Herstellung eines Schichtwerkstoffes, bei dem auf eine metallische Trägerschicht eine Kunststoffgleitschicht aufgebracht wird, **dadurch gekennzeichnet, daß** eine Pulvermischung aus 60 - 95 Vol.-% PVDF und Rest PTFE oder PTFE und mindestens einer weiteren Komponente mit einer Dichte <7 g/cm³ hergestellt wird, wobei es sich bei der oder den weiteren Komponenteln um PI, PAI, Polyamide, PPS, PES, PEEK, PSU, Polyester, Graphit, Ruß, C-Fasern, Koks, MoS₂, BN, CaF₂ oder CaCO₃ handelt,
daß die Pulvermischung auf das metallische Trägermaterial aufgestreut und anschließend bis über den Erweichungspunkt des PVDF-Anteils zur Ausbildung der Kunststoffgleitschicht erwärmt wird und
daß danach die Kunststoffgleitschicht glattgewalzt wird.

10. Verfahren nach Anspruch 9, **dadurch gekennzeichnet, daß** ein PVDF-Pulver mit einer Korngröße zwischen 40 und 180 µm und ein PTFE-Pulver mit einer Korngröße zwischen 20 und 140 µm verwendet wird.

11. Verfahren nach Anspruch 10, **dadurch gekennzeichnet, daß** die Korngröße des PVDF-Pulvers zwischen 70 und 130 µm und die des PTFE-Pulvers zwischen 60 und 100 µm liegt.

12. Verfahren nach einem der Ansprüche 9 bis 11, **dadurch gekennzeichnet, daß** als PTFE-Pulver ein Regeneratpulver verwendet wird.

13. Verfahren nach einem der Ansprüche 9 bis 12, **dadurch gekennzeichnet, daß** die Kunststoffgleitschicht direkt auf die metallische Trägerschicht aufgebracht wird.

14. Verwendung des Schichtwerkstoffes nach einem der Ansprüche 1 bis 8 zur Herstellung von Gleitelementen für den geschmierten und den ungeschmierten Einsatz.

## Claims

1. Laminated material for sliding elements having a metallic substrate layer and a plastic sliding layer applied thereto, consisting of PVDF as a matrix material in which PTFE is intercalated as a filler material **characterised in that**
the PVDF content is 60 - 95 volume percent and
the remainder is PTFE or
PTFE and at least one other component having a density < 7 g/cm³, wherein the additional component or components are taken from the group of PI, PAI, polyamides, PPS, PES, PEEK, PSU, polyester, graphite, carbon black, carbon fibres, coke, MoS₂, BN, CAF₂ or CaCO₃.

2. The material according to claim 1, **characterised in that** the content of other component(s) is no more than 5 volume percent.

3. The material according to either of claims 1 or 2, **characterised in that** the PVDF content is 70 - 88 volume percent.

4. The material according to claim 3, **characterised in that** the PTFE content is 12 - 30 volume percent.

5. The material according to any of claims 1 to 4, **characterised in that** the substrate material has a surface roughness R_{z} of over 10 µm.

6. The material according to claim 5, **characterised in that** the substrate material has a surface roughness R_{z} of over 30 µm.

7. The material according to any of claims 1 to 6, **characterised in that** the substrate material is steel, stainless steel, a copper alloy, aluminium or an aluminium alloy, or a laminated combination of these materials.

8. The material according to any of claims 1 to 7, **characterised in that** the thickness of the plastic sliding layer over the substrate material is 20 - 400 µm.

9. A method for producing a laminated material in which a plastic sliding layer is applied to a metallic substrate layer **characterised in that** a powder mixture is prepared consisting of 60 - 95 volume percent PVDF, the remainder being PTFE or PTFE and at least one other component having a density < 7 g/cm³, wherein the additional component or components are taken from the group of PI, PAI, polyamides, PPS, PES, PEEK, PSU, polyester, graphite, carbon black, carbon fibres, coke, MoS₂, BN, CAF₂ or CaCO₃,
that the powder mixture is deposited on the metallic substrate material and is heated to above the softening temperature of the PVDF content in order to form the plastic sliding layer and
that the plastic sliding layer is then rolled smooth.

10. The method according to claim 9, **characterised in that** a PVDF powder having a grain size between 40 and 180 µm and a PTFE powder having a grain size between 20 and 140 µm is used.

11. The method according to claim 10, **characterised in that** grain size of the PVDF powder is between 70 and 130 µm and that of the PTFE powder is between 60 and 100 µm.

12. The method according to any of claims 9 to 11, **characterised in that** a regenerate powder is used for the PTFE powder.

13. The method according to any of claims 9 to 12, **characterised in that** the plastic sliding layer is applied directly to the metallic substrate layer.

14. Use of the laminated material according to any of claims 1 to 8 in the production of sliding elements for lubricated and unlubricated use.

## Revendications

1. Matériau stratifié pour éléments de glissement avec une couche support métallique et une couche de glissement de matière plastique appliquée sur celle-ci, qui présente du PVDF (poly(fluorure de vinylidène)) en tant que matière de matrice, dans laquelle du PTFE (polytétrafluoroéthylène) est incorporé en tant que charge, **caractérisé en ce que**,
la proportion de PVDF est de 60 à 95 % en volume, et que
le reste est constitué de PTFE ou bien
de PTFE et au moins un composant supplémentaire ayant une masse volumique < 7 g/cm³, où quant au (x) composant(s) supplémentaire(s), il s'agit de PI (polyimides), PAI(polyamideimides), polyamides, PPS (poly(sulfure de phénylène)s), PES (polyéthersulfones), PEEK (polyétheréthercétones), PSU (polysulfones), polyesters, graphite, suie, fibres de C, coke, MoS₂, BN, CaF₂ ou CaCO₃.

2. Matériau selon la revendication 1, **caractérisé en ce que** la proportion du ou des composants supplémentaires est de 5 % en volume au maximum.

3. Matériau selon la revendication 1 ou 2, **caractérisé en ce que** la proportion de PVDF est de 70 à 88 % en volume.

4. Matériau selon la revendication 3, **caractérisé en ce que** la proportion de PTFE est de 12 à 30 % en volume.

5. Matériau selon l'une quelconque des revendications 1 à 4, **caractérisé en ce que** la matière support possède une rugosité de surface R_{z} supérieure à 10 µm.

6. Matériau selon la revendication 5, **caractérisé en ce que** la matière support possède une rugosité de surface R_{z} supérieure à 30 µm.

7. Matériau selon l'une quelconque des revendications 1 à 6, **caractérisé en ce que** la matière support métallique est l'acier, l'acier inoxydable, un alliage de cuivre, l'aluminium ou un alliage d'aluminium ou une association stratifiée de ces matières.

8. Matériau selon l'une quelconque des revendications 1 à 7, **caractérisé en ce que** l'épaisseur de la couche de glissement en matière plastique sur la matière support est de 20 à 400 µm.

9. Procédé de préparation d'un matériau stratifié, dans lequel une couche de glissement de matière plastique est appliquée sur une couche support métallique, **caractérisé en ce qu'**un mélange de poudre constitué de 60 à 95 % en volume de PVDF et le reste de PTFE ou de PTFE et au moins au autre composant ayant une masse volumique < 7 g/cm³, est préparé, où quant au(x) composant(s) supplémentaire(s), il s'agit de PI, PAI, polyamides, PPS, PES, PEEK, PSU, polyesters, graphite, suie, fibres de C, coke, MoS₂, BN, CaF₂ ou CaCO₃,
**en ce que** le mélange de poudre est réparti sur la matière support métallique, puis chauffé jusqu'au point de ramollissement de la proportion PVDF pour former la couche de glissement de matière plastique et
**en ce que** la couche de glissement de matière plastique est ensuite laminée au rouleau.

10. Procédé selon la revendication 9, **caractérisé en ce qu'**une poudre de PVDF est employée avec une granulométrie comprise entre 40 et 180 µm et une poudre de PTFE est employée avec une granulométrie comprise entre 20 et 140 µm.

11. Procédé selon la revendication 10, **caractérisé en ce que** la granulométrie de la poudre de PVDF est comprise entre 70 et 130 µm et celle de la poudre de PTFE est comprise entre 60 et 100 µm.

12. Procédé selon l'une quelconque des revendications 9 à 11, **caractérisé en ce qu'**une poudre récupérée est employée en tant que poudre de PTFE.

13. Procédé selon l'une quelconque des revendications 9 à 12, **caractérisé en ce que** la couche de glissement de matière plastique est appliquée directement sur la couche support métallique.

14. Utilisation du matériau stratifié selon l'une quelconque des revendications 1 à 8 pour préparer des éléments de glissement destinés à une mise en oeuvre avec lubrification et sans lubrification.
